# EUROPÄISCHE PATENTSCHRIFT

(11) **EP 2 289 345 B1**
(45) Veröffentlichungstag und Bekanntmachung des Hinweises auf die Patenterteilung: **02.11.2011**
(21) Anmeldenummer: 09010255.9
(22) Anmeldetag: 07.08.2009
(51) Int. Cl.: A23C 19/02, A23C 19/06, A23C 19/082, A23C 19/08

(54) **Verfahren und Vorrichtung zur Herstellung eines Käses oder einer Käsezubereitung sowie Käse oder Käsezubereitung**
Method and device for producing a cheese or a cheese preparation and cheese or cheese preparation
Procédé et dispositif de fabrication d'un fromage ou d'une préparation au fromage ainsi que fromage ou préparation au fromage

(43) Veröffentlichungstag der Anmeldung: 02.03.2011
(73) Patentinhaber: Hofmeister Vermögensverwaltungs GmbH & Co. KG, 82166 Gräfelfing (DE)
(72) Erfinder: Lingg, Armin, 87437 Kempten (DE); Prinz, Franz, 87463 Dietmannsried/ Probstried (DE)
(74) Vertreter: Kuhnen & Wacker

(56) Entgegenhaltungen:
- DE-T2- 69 904 718
- US-A1- 2004 144 262
- US-A1- 2006 062 873
- US-B1- 6 827 961

## Beschreibung

Die Erfindung betrifft ein Verfahren zur Herstellung eines Käses oder einer Käsezubereitung nach Anspruch 1 und eine Vorrichtung zur Herstellung eines Käses oder einer Käsezubereitung nach Anspruch 12.

Käse sind frische oder in verschiedenen Graden der Reifung befindliche Erzeugnisse.

Hergestellt wird Käse aus Milch, Rahm, entrahmter Milch, Buttermilch und Molke sowie aus Milch- und/oder Molkenretentat durch Säuerung und/oder Lab.

Durch Säuerung oder durch Labeinwirkung entsteht eine Gallerte (Coagulum), vorwiegend bestehend aus Eiweiß und Milchfett. Als Rohstoff können neben Kuhmilch auch Ziegen-, Schafs-, Büffelmilch oder Gemische dieser Milchsorten verwendet werden.

Als Zusätze, insbesondere für Käsezubereitungen, können auch andere Milcherzeugnisse, Speisesalz und andere Hilfsstoffe Verwendung finden.

In der Regel wird pasteurisierte Käsereimilch durch Zugabe von Lab und Bakterienkulturen bei einer Temperatur von etwa 30 bis 40 °C dickgelegt. Dabei findet eine säure- und/oder enzymatisch verursachte Gerinnung von Milcheiweiß statt. Hierbei wird nach einer variablen, vorbestimmten Zeit und/oder nach Erreichen eines vorbestimmten pH-Wertes eine kompakte Gelmasse ausgebildet. Durch Zerschneiden dieser Gelmasse entstehen ein als Bruch bzw. Rohkäse bezeichneter, fester Bestandteil und ein als Molke bezeichneter, flüssiger Bestandteil. Die Molke wird in der Regel möglichst vollständig vom Bruch abgezogen. Der Molkenabzug wird einerseits durch mechanische Einwirkung, wie beispielsweise grobes Schneiden und Rühren des Bruchs, andererseits durch Einwirkung von thermischer Energie gefördert. Anschließend kann der Bruch gewaschen werden.

Bei der Behandlung des Bruchs und/oder im weiteren Verlauf der Käseherstellung wird die behandelte Masse oftmals derart hohen Temperaturen ausgesetzt, dass sich der Zustand der ausgefällten Milchproteine im Vergleich zum originären Bruch verändert. Dies bewirkt zum einen eine bisweilen unerwünschte Änderung des Gefüges. Zum anderen bewirken erhöhte Behandlungstemperaturen eine schlechte Emulgierung und folglich eine schlechte Anbindung von Milchfetten an das Proteingitter. Hierdurch kann es beispielsweise zu einer nachteiligen Fettausschwitzung kommen. Darüber hinaus ist eine derartige Behandlung regelmäßig mit einem Aromaverlust im Vergleich zum Ausgangsmaterial verbunden.

In der US-Patentschrift Nr. 1,522,383 wird daher ein verbessertes Verfahren zum Emulgieren von Käse in der Kälte oder bei einer geringen Temperatur ohne die Anwendung von Wärme oder allenfalls Erwärmen auf eine sehr moderate Temperatur, vorzugsweise etwa 95 bis 105 °F (entspricht etwa 35 bis 40 °C), vorgeschlagen. Dabei wird ein Gemisch aus zerkleinertem Käse einer Niedertemperatur-Emulgierung und einer nachfolgenden Pasteurisierung ausgesetzt. Während eine Temperatur von 110°F (entspricht etwa 43 °C) nicht überschritten wird, wird die aktive Emulgierung durch Aufbauen eines hinreichenden Drucks und durch Zugabe von Emulgierungsagenzien unterstützt. Hierbei wird innerhalb einer sehr kurzen Zeit das originäre Käsegefüge völlig zerstört. Es entsteht ein Käse mit einem neuen, emulgierten Gefüge.

Nachteilig an diesem Verfahren ist die Zerstörung des originären Käsegefüges, weshalb das erhaltene Käseprodukt hinsichtlich seines Gefüges erheblich von dem des Ausgangsmaterials abweicht.

Demgegenüber wird in Dokument EP 0 535 728 B1 ein Verfahren zur Herstellung einer unpasteurisierten Käsezubereitung vorgeschlagen. Dabei wird eine Mischung aus 30 bis 90 Gew.-% eines ungereiften Käses und einer Paste hergestellt, die Partikel einer Eiweißquelle enthält. Die Mischung wird gemischt und auf eine Temperatur in einem Bereich von etwa 35 bis etwa 65 °C erwärmt. Hierdurch wird die Mischung unterhalb der Pasteurisierungstemperaturen plastifiziert. Dabei wechselwirken die Eiweißpartikel mit den ungereiften Bruchpartikeln, wodurch das Gefüge des ungereiften Ausgangskäses verändert wird.

Die bei diesem Verfahren verwendeten Partikel einer Eiweißquelle weisen eine bevorzugte Größe von weniger als 50 µm auf, weshalb sie nur unter dem Mikroskop, nicht aber mit bloßem Auge sichtbar sind. Das Endprodukt weist ein einheitliches Gefüge und eine einheitliche Farbe auf, wobei einzelne Inhaltsstoffe im Endprodukt nicht sichtbar seien.

Nach Angaben der Erfinder könne mittels dieses Verfahrens das Gefüge und/oder der Geschmack und/oder das Aroma eines natürlich gereiften, mild gewürzten oder gealterten Käses erreicht werden, obwohl auf einen nachfolgenden Reifeschritt verzichtet wird. Nachdem dieser Käse nicht pasteurisiert wird, unterscheide sich dieser Käse von einem herkömmlich hergestellten Käse hinsichtlich seines Geschmacks, Gefüges und seiner Konsistenz vorteilhaft. Er komme dem eines natürlichen Käses nahe.

Der nach diesem Verfahren hergestellte Käse nähere sich zwar in seinem Gefüge einem natürlich hergestellten Käse an. Dennoch wird das Gefüge des verwendeten Ausgangsmaterials durch die Beimischung und Wechselwirkung der mikroskopischen Eiweißpartikeln erheblich verändert. Zudem können aufgrund der moderaten Erwärmung auf bis zu 65 °C die aromatischen Eigenschaften gegenüber dem Rohmaterial nachteilig verändert sein.

In der Druckschrift EP 1 902 624 A1 wird eine alternative Verfahrensvariante zur Verbesserung der Käsereifung vorgeschlagen. Hierbei wird zur Herstellung eines Halbhart- oder Hartkäses der Bruch nach Molkenabzug und optionalem Mischen in eine gasund wasserdurchlässige Verpackung gefüllt und darin gereift. Das Verschmelzen der Bruchkörner während oder nach dem Abfüllen in die Verpackung wird insbesondere durch Einstellen einer Temperatur im Bereich von 30 bis 35 °C, beispielsweise durch Anwendung von Strahlungswärme, verbessert. Dabei wachsen die einzelnen Bruchkörner zusammen, um einen konsistenten und geschlossenen Bruchkörper zu bilden.

Zwar wird mit dem vorgeschlagenen Verfahren ein Käseprodukt erhalten, das als Hauptbestandteil Käse aufweist und organoleptisch und visuell von diesem Hauptbestandteil geprägt wird. Jedoch kommt das Verfahren nicht ohne den Einsatz eines Reifungsschritts in einer speziell hierfür vorgesehenen Verpackung aus. Das Abfüllen des Rohmaterials in individuelle Verpackungen vor der Reifung macht den Käseherstellungsprozess nicht nur verfahrenstechnisch aufwendig, sondern auch teuer.

Zudem muss für jede gewünschte Form oder Größe des Endprodukts eine eigene Verpackung bereitgestellt werden, was die Flexibilität dieses Herstellungsverfahrens einschränkt.

In der Patentschrift DE 699 04 718 T2 wird ferner ein Verfahren für die Herstellung eines Käseprodukts durch Behandeln eines aus einem Käse bestehenden Ausgangsmaterials vorgeschlagen. Dabei wird ein thermisches und knetartiges mechanisches Behandeln des Ausgangskäses nach dessen Fraktionierung auf eine Temperatur von höchstens 65 °C vorgesehen, um eine begrenzte Destrukturierung des Proteingitters des Ausgangskäses zu erhalten. Das Gemisch wird um 8 bis 20 °C abgekühlt und gegebenenfalls mittels einer Schneckenvorrichtung mechanisch behandelt. Ferner kann das Produkt geformt werden. Die thermische und knetartige mechanische Behandeln und das Abkühlen werden ausgeführt, in dem zum Ausgangsmaterial eine Wassermenge von wenigstens 7 bis höchstens 20 Gew.-% in Bezug auf das Ausgangsmaterial hinzugefügt wird. Dabei liegt die Temperatur der thermischen Behandlung im Bereich zwischen 30 und 65 °C.

Mit diesem Verfahren können nach Angaben der Erfinder Käseprodukte erhalten werden, die eine weiche, cremige und schmelzende Struktur aufwiesen und zugleich die aromatischen Eigenschaften des Ausgangsprodukts beibehielten.

Nachteilig an diesem Verfahren ist, daß das resultierende Käseprodukt aufgrund der wenigstens teilweisen Destrukturierung des Proteingitters eine cremige und schmelzende Struktur aufweist. Damit geht das natürliche Gefüge des Ausgangsmaterials verloren.

Ein weiterer Nachteil stellt die thermische Behandlung durch Zuführen von Wärme sowie das damit verbundene Abkühlen des Gemisches dar. Dies erfordert eine aufwendige anlagentechnische Ausgestaltung der zur Durchführung des Verfahrens verwendeten Vorrichtung. Ferner steigt durch das Erwärmen und Abkühlen des Käses der Energiebedarf des Herstellungsverfahrens.

In diesem Zusammenhang wirkt sich auch die Zugabe einer Wassermenge von wenigstens 7 bis höchstens 20 Gew.-% nachteilig aus. Nachdem die zusätzliche Wasserportion ebenfalls erwärmt und abgekühlt werden muß, steigt der ohnehin schon erhöhte Energiebedarf noch weiter an.

Zwar kann dieses Verfahren als Weiterentwicklung eines vorangehenden Verfahrens auf den Einsatz eines Strukturfestigers verzichten, jedoch ist eine Zugabe einer relativ großen Wassermenge in den vorstehend diskutierten Mengen sowie eine kombinierte moderate thermische und mechanische Behandlung erforderlich. Somit ist ein weiterer Nachteil dieses Verfahrens, dass mit der resultierenden weichen, cremigen und schmelzenden Struktur das ursprüngliche Gefüge des Ausgangskäses nicht erhalten bleibt.

Der Erfindung liegt daher die Aufgabe zugrunde, ein Verfahren zur Herstellung eines Käses oder einer Käsezubereitung derart weiterzubilden, daß ein Käse oder ein Käseprodukt mit einem Gefüge hergestellt werden kann, das mit dem zu dessen Herstellung verwendeten Ausgangsmaterial im Wesentlichen gleichartig ist.

Zudem ist es ein Aspekt der Erfindung, die organoleptischen Eigenschaften des Ausgangsmaterials, insbesondere dessen Geschmack, Geruch und/oder Aroma, weitgehend zu erhalten.

Es ist ein weiterer Aspekt der vorliegenden Erfindung, ein Verfahren zur Herstellung eines Käses oder einer Käsezubereitung bereitzustellen, das eine deutlich verbesserte Flexibilität hinsichtlich der Produktgröße und -formen aufweist.

Ferner ist es ein Aspekt der vorliegenden Erfindung, ein Verfahren zur Herstellung eines Käses oder einer Käsezubereitung bereitzustellen, daß eine unbeschränkte Verwendungsmöglichkeit für die entstehende Molke sicherstellt.

Zudem ist es ein Aspekt der Erfindung, eine hohe Gewichtsgenauigkeit der erzeugten Käseformstücke zu erreichen.

Soweit beim erfindungsgemäßen Herstellungsverfahren die Behandlung eines Bruchs bzw. einer Rohkäsemasse in einem Salzbad bzw. einer Salzlake vorgesehen ist, ist es zudem ein Aspekt der Erfindung, den Einsatz des Salzbades zu vereinfachen und wirtschaftlicher zu gestalten.

Schließlich ist es ein Aspekt der Erfindung, die Steuerbarkeit der chemischen Inhaltsstoffe des Enderzeugnisses, wie beispielsweise deren Salz- oder Wassergehalte, zu verbessern.

Erfindungsgemäß wird ein Verfahren zur Herstellung eines Käses oder einer Käsezubereitung unter Verwendung eines Ausgangsmaterials, vorzugsweise eines Bruchs, eines gereiften Käses oder einer Zubereitung aus frischem oder gereiftem Käse sowie aus Milch- und/oder Molkenretentaten, vorgeschlagen, mit den Schritten:
a) Zerkleinern des Ausgangsmaterials derart, dass das Ausgangsmaterial ein homogenes, schnittfestes, feinkörniges Gefüge mit Korngrößen von ≤ 10 mm aufweist; oder Zuführen eines zerkleinerten Ausgangsmaterials, insbesondere eines homogenen, schnittfesten Ausgangsmaterials mit einem feinkörnigen Gefüge mit Korngrößen ≤ 10 mm;
b) während des Schritts a) Beaufschlagen des Materials mit einem Vakuum, wobei der absolute Druck ≤ 0,8 bar beträgt;
c) Formen des Materials; und
d) Portionieren des Materials.

Erfindungsgemäß wird damit erstmals die Erzeugung eines Käses oder einer Käsezubereitung mit einem im Wesentlichen gleichartigen Gefüge wie das eingesetzte Ausgangsmaterial vorgeschlagen. Im Falle der Verwendung eines Bruchs als Ausgangsmaterial erfolgt die Erzeugung des Bruchs in der vorstehend beschriebenen, herkömmlichen Weise.

Indem nämlich im Rahmen des erfindungsgemäßen Verfahrens vollständig auf eine thermische Behandlung des Ausgangsmaterials verzichtet werden kann, gelingt es vorteilhaft, das originäre Gefüge des Ausgangsmaterials zu bewahren. Damit kann eine strukturelle Veränderung des Ausgangsmaterials aufgrund von wärmebedingter Destrukturierung wirksam vermieden werden.

Zudem weist das erfindungsgemäße Erzeugnis im Wesentlichen dieselben organoleptischen Eigenschaften, also Geschmack, Geruch und/oder Aroma, wie das Ausgangsmaterial auf.

Das Anlegen des Vakuums während des Zerkleinerns bewirkt vorteilhaft die Entziehung von möglicherweise im zu verarbeitenden Material eingeschlossenen Gasen. So wird die Entfernung beispielsweise von eingeschlossener Luft und/oder Gärgasen durch das im Wesentlichen gleichzeitige Einwirken von mechanischen Kräften und eines Vakuums erheblich verbessert.

Dabei bewirken die mechanischen Kräfte eine Kombination von Homogenisieren und weiterem Zerkleinern des zuvor vorzerkleinerten Ausgangsmaterials. Hieraus resultiert ein homogenes, kompaktes, formbeständiges, schnittfestes Material mit einem pappigen, feinkörnigen Gefüge.

Das Formen des Materials mit frei wählbarer Masse erlaubt eine einfache und gewichtsgenaue Portionierung.

Erfindungsgemäß erfolgt die Behandlung des Materials in größeren Losen, bevor das Material in kleinere Größen, wie beispielsweise Verkaufsgrößen, portioniert wird. Durch diese los- bzw. batchweise Behandlung wird eine größere Homogenität des Enderzeugnisses erzielt. Zudem wird hierdurch der verfahrenstechnische Aufwand minimiert.

Ferner wird durch diese Vorgehensweise eine deutlich verbesserte Flexibilität hinsichtlich der Produktgröße und -formen erreicht. So sind nämlich die bekannten und herkömmlich verwendeten Formensätze auf vorbestimmte, fixe Volumina und/oder Größen beschränkt. Ein Abweichen von diesen vorbestimmten Größen war bisher nicht möglich. Erfindungsgemäß können dagegen nahezu unbeschränkte Produktgrößen und -formen realisiert werden.

Das vorgeschlagene Verfahren zeichnet sich durch eine hohe Gewichtsgenauigkeit der erzeugten Materialportionen aus. Diese ist vorteilhaft erhöht gegenüber den herkömmlich hergestellten Bruchwürfeln, die aufgrund der volumetrischen Dosierung und größerer Temperaturschwankungen gewöhnlich schwankende Gehalte an Molke und damit an Bruchwürfelmassen aufweisen.

Insgesamt weist das erfindungsgemäße Verfahren eine erhöhte Steuerbarkeit der chemischen Inhaltsstoffe des Enderzeugnisses, wie beispielsweise dessen Salz- oder Wassergehalt, auf.

Vorteilhafte Weiterbildungen des erfindungsgemäßen Herstellungsverfahrens sind Gegenstand der abhängigen Ansprüche 2 bis 11.

So kann das resultierende Material ein homogenes, schnittfestes, feinkörniges Gefüge mit Korngrößen von ≤ 4 mm bis in den µm-Bereich aufweisen. Dabei werden die Korngrößen im zu beurteilenden Gefüge beispielsweise unter dem Mikroskop oder mittels eines geeigneten optischen Auswertesystems ermittelt. Die so ermittelten Größenklassen beziehen sich auf jene Anteile im Gefüge bzw. auf jene sichtbaren Stücke, die sich ausreichend scharf von benachbarten Körnern abheben.

Mittels der weiter verringerten Korngrößen läßt sich die Homogenität des erhaltenen Endprodukts weiter verbessern.

Ferner kann in Schritt b) der absoluten Druck des Vakuums ≤ 0,8 bar betragen. Ferner kann das Verfahren den Schritt aufweisen:
e) Reifen des portionierten Materials.

Unter Reifung wird erfindungsgemäß eine herkömmliche Reifung verstanden, wie sie dem Fachmann bekannt ist.

Dabei wird das wie vorstehend beschrieben behandelte Material bei Raumtemperatur oder einer abgesenkten Temperatur im Bereich von beispielsweise 8 bis 20° C bei vorbestimmten Luftfeuchten gelagert. Hierzu können die portionierten Materialstücke beispielsweise auf Reifehorden gebracht werden, mit Reifungskulturen versetzt, weiter geformt und geglättet werden.

Das Vorsehen des Reifungsschritts erlaubt eine erhebliche Erweiterung der mit dem erfindungsgemäßen Verfahren herzustellenden Erzeugnispalette.

Des Weiteren kann das Verfahren den Schritt aufweisen:
f) Verpacken des Materials.

Durch einen sich anschließenden Verpackungsschritt kann der erfindungsgemäß hergestellte Käse oder die erfindungsgemäß hergestellte Käsezubereitung unmittelbar nach seiner Herstellung in eine verkaufsfertige Gestalt gebracht werden. Hierdurch wird die Handhabung des Herstellungsverfahrens weiter vereinfacht.

Das Verfahren kann ferner den Schritt aufweisen:
g) vor Schritt a) Einstellen der Temperatur des Ausgangsmaterials auf eine Temperatur im Bereich von 0 bis 20 °C.

Eine solche Temperatureinstellung beeinflußt die Viskosität des zu verarbeitenden Ausgangsmaterials vorteilhaft, ohne das Ausgangsmaterial strukturell oder organoleptisch zu beeinträchtigen.

Das Verfahren kann ferner den Schritt aufweisen:
h) vor Schritt a) Beaufschlagen des Ausgangsmaterials mit Salz, vorzugsweise in Gestalt einer Salzlake oder eines Trockensalzes.

Alternativ kann jedoch die vorstehend beschriebene Behandlung des Ausgangsmaterials mit einer Salzlake, weiteren Hilfsstoffen oder dergleichen vollständig vermieden werden.

Zudem kann das Verfahren vor oder während des Schritts a) ferner wenigstens einem der Schritte aufweisen:
i) Zugabe von wenigstens einem halbfertigen oder fertigen Käse; oder
j) Zugabe von wenigstens einem Hilfsstoff, ausgewählt aus einer Gruppe, wobei die Gruppe die gemäß der Käseverordnung in der geltenden Fassung zulässigen Hilfs- und Zusatzstoffe ausgenommen Wasser und Wasserdampf enthält; oder
k) Zugabe von Wasser in einer Menge ≤ 20, vorzugsweise ≤ 10, ≤ 7, ≤ 5, ≤ 4 oder insbesondere ≤ 3 Gew.-% bezogen auf die Masse des feuchten Ausgangsmaterials.

Die Gruppe der halbfertigen oder fertigen Käse, die dem Ausgangsmaterial zugegeben werden können, enthält beispielsweise: Hartkäse, Schnittkäse, halbfester Schnittkäse, Weichkäse, Sauermilchkäse, Weisskäse, Frischkäse, Käsezubereitung, Milch- und Molkenretentate.

So kann erfindungsgemäß ein halbfertiger oder fertiger Käse dem Ausgangmaterial, beispielsweise einem ungereiften Bruch oder einem gereiften Käse oder einer gereiften Käsezubereitung zugegeben werden, woraus sich vorteilhaft eine enorme Anwendungsbreite des erfindungsgemäßen Verfahren hinsichtlich der eingesetzten Ausgangsmaterialien ergibt.

In entsprechender Weise wird die Vielfalt der als erfindungsgemäß erzeugten Produkte durch die Zugabe wenigstens eines Hilfs- oder Zusatzstoffs gemäß Käseverordnung erweitert.

Dabei wird erfindungsgemäß unter Hilfs- und Zusatzstoffen wenigstens die nach geltenden Fassung der Käseverordnung zulässigen Hilfs- und Zusatzstoffe verstanden, vorzugsweise die gemäß den §§ 3, 4 und 23 der Käseverordnung in der Fassung vom 13. Dezember 2007 zugelassenen Stoffe.

Insbesondere kann die Gruppe der einsetzbaren Hilfs- und Zusatzstoffe auch die nachfolgenden Stoffe oder Gemische derselben enthalten:
- Wiederkäuermagenlab, Zubereitungen aus Wiederkäuermagenlab, Wiederkäuermagenpepsin, Schweinemagenpepsin (Lab-Pepsin-Zubereitungen), Labaustauschstoffe;
- Bakterien-, Hefe- und Pilzkulturen;
- Speisesalz, iodiertes Speisesalz;
- Gewürze, Gewürzzubereitungen, Kräuter, Kräuterzubereitungen, natürliche und synthetische Aromastoffe und Aromaextrakte;
- Emulgatoren, Bindemittel, Verdickungsmittel;
- Speiseöl;
- Trockenmilcherzeugnisse, Molkereierzeugnisse, Sahneerzeugnisse, Milchzuckererzeugnisse, Milcheiweißerzeugnisse, Milchbestandteile, eiweißangereichertes Molkenpulver;
- Casein, Caseinat;
- Früchte, Fruchterzeugnisse, Gemüse, Gemüseerzeugnisse;
- Schinken, Fleisch- und Wursterzeugnisse;
- Probiotika, Prebiotika; und
- frisch entwickelter Rauch aus naturbelassenen Hölzern und Zweigen, Heidekraut und Nadelholzsamenständen.

Ferner wird eine Verunreinigung der Herstellungsvorrichtung mit den zugesetzten Hilfsstoffen während der vorgeschalteten Verfahrensschritte zur Herstellung des Ausgangsmaterials, insbesondere des Bruchs, vermieden. Erfindungsgemäß kann nämlich ein einheitliches Ausgangsmaterial hergestellt werden, das dann erst ab dem Schritt a) beispielsweise durch den Einsatz verschiedener Gewürze in unterschiedliche Halbfabrikate differenziert wird.

Analog hierzu wird im Falle der Verwendung von Bruch als Ausgangsmaterial eine Verunreinigung der gewonnenen Molke mit den zugesetzten Hilfsstoffen vorteilhaft vermieden. Hieraus ergibt sich wiederum ein unbeschränkter Einsatzbereich der Molke. Ferner werden weitere Verfahrensschritte und Kosten für eine mögliche Aufreinigung der Molke vorteilhaft vermieden.

Des Weiteren wird die Zugabe von Wasser auf eine geringe Menge beschränkt. Dies unterstützt vorteilhaft die Erhaltung des originären Gefüges des Ausgangsmaterials. Ferner wird der Energiebedarf aufgrund der verringerten Wassermenge analog zum vorstehend diskutierten herabgesetzt.

Erfindungsgemäß besteht darüber hinaus die Möglichkeit, auf eine Wasserzugabe zum Ausgangsmaterial und/oder zum Material vollständig zu verzichten. Hierdurch wird das Materialgefüge bestmöglich erhalten und der Energiebedarf noch weiter gesenkt.

Das Verfahren kann ferner während der Schritte a) und/oder c) wenigstens einen der Schritte aufweisen:
l) Beaufschlagen des Materials mit einem Vakuum, wobei der absolute Druck ≤ 0,8 bar beträgt; oder
m) Beaufschlagen des Materials mit einem Inertgas, vorzugsweise Stickstoff, oder einem Gemisch von Inertgasen.

Mittels des Anlegens eines Vakuums wird die Vermeidung unerwünschter Poren im Endprodukt weiter verbessert. Diese zusätzliche (Vor-)Entgasung unterstützt das Erhalten des gewünschten Gefüges vorteilhaft.

Eine zusätzliche Begasung mit Inertgas oder Inertgasmischungen unterstützt die Entfernung von eventuell im Ausgangsmaterial oder Material vorhandenen Sauerstoff. Hierdurch werden Oxidationsvorgänge vermieden und die Erhaltung der organoleptischen Qualität des Ausgangsmaterials und des Materials weiter verbessert.

Die Verwendung von Inertgas ist nicht auf Stickstoff beschränkt, sondern kann auch andere, dem Fachmann bekannten oder denkbaren Inertgase, wie beispielsweise Kohlenstoffdioxid, Edelgase oder dergleichen, einschließen.

Von besonderem Vorteil ist, wenn während der Schritte a) bis d) eine thermische Behandlung des Ausgangsmaterials oder des Materials, insbesondere ein Kühlen oder Erwärmen des Ausgangsmaterials oder des Materials, unterbleibt. Hierdurch kann der anlagentechnische Aufwand begrenzt und Energie eingespart werden.

Zudem ist der Eintrag von mechanischer Energie durch Rühren und Kneten derart gering, dass es nur zu geringfügigem Erwärmen des Ausgangsmaterials und/oder des Materials um maximal 5 °C kommt.

Dies unterdrückt eine unerwünschte Veränderung der mikroskopischen und/oder makroskopischen Strukturen, wie beispielsweise eine Fettausschwitzung oder Plastifizieren. Zudem bewirkt dies eine möglichst weitgehende Beibehaltung des originären Gefüges.

Es ist ferner von Vorteil, wenn wenigstens während der Schritte a) bis d) die Temperatur des Ausgangsmaterials oder des Materials jeweils eine Temperatur von 50 °C, vorzugsweise 40 °C, insbesondere 30 °C, nicht überschreitet.

Aufgrund einer solchen schonenden Behandlung wird die Qualität des Ausgangsmaterials und/oder des Materials in organoleptischer und struktureller Hinsicht bewahrt.

In vorrichtungstechnischer Hinsicht wird die Aufgabe der Erfindung durch die Vorrichtung zur Herstellung eines Käses oder einer Käsezubereitung mit den Merkmalen des Anspruchs 12 gelöst.

Die Vorrichtung zur Herstellung eines Käses oder einer Käsezubereitung, insbesondere zur Durchführung eines erfindungsgemäßen Verfahrens nach einem der Ansprüche 1 bis 11, weist wenigstens nachfolgende Bestandteile auf:
- eine Vorzerkleinerungsvorrichtung;
- eine Homogenisier-/Zerkleinerungsvorrichtung; und
- eine Portioniervorrichtung.

Dabei ist die Vorzerkleinerungsvorrichtung als ein Cutter, insbesondere ein Schüsselcutter, oder ein Mischer ausgeführt.

Ferner ist die Homogenisier-/Zerkleinerungsvorrichtung als ein Vakuumfüller ausgeführt. Dabei weist der Vakuumfüller eine Zuführeinrichtung, insbesondere einen Trichter, ein Flügelzellenförderwerk, eine Vorrichtung zur Erzeugung eines Vakuums und eine Vorrichtung zur Erzeugung eines Materialstrangs auf.

Die Verwendung eines Cutters, insbesondere eines Schüsselcutters, oder eines Mischers, erlaubt eine präzise steuerbare und gleichmäßige mechanische Zerkleinerung des Ausgangsmaterials. Neben dem Schüsselcutter können auch andere Ausführungsformen eines Cutters, wie sie insbesondere in der Fleischverarbeitung verwendet werden, vorgesehen werden.

Vorzugsweise weist der Cutter eine rotierende, kühlbare Schüssel, einen um eine im Wesentlichen vertikal ausgerichtete Achse drehbar gelagerten Messersatz und/oder eine Haube auf. Insbesondere kann der Cutter vakuumtauglich ausgeführt sein.

Der erfindungsgemäß vorgesehene Mischer kann eine in der Lebensmittelverarbeitung übliche doppelwandige Wanne und wenigstens eine Mischerwelle aufweisen, deren Drehrichtung umgekehrt werden kann. Als Mischer eignen sich insbesondere Schaufel-, Paddel-, Schnecken- und Wellenmischer. Der Mischer kann temperierbar ausgeführt werden.

Vorteilhafte Weiterbildungen der erfindungsgemäßen Vorrichtung sind Gegenstand der abhängigen Ansprüche 13 bis 15.

So kann die Vorzerkleinerungsvorrichtung eine Vorrichtung zur Erzeugung eines Vakuums aufweisen.

Vorzugsweise ist die Verwendung eines Vakuumfüllers vorgesehen, wie er aus der Fleisch- bzw. Wurstverarbeitung und -herstellung bekannt ist.

Dabei kann der Vakuumfüller einen Füllwolf mit wenigstens einer Lochplatte, vorzugsweise zwei Lochplatten, und wenigstens einem Schneidwerk aufweisen. Dabei kann das Schneidwerk wenigstens ein Messer, vorzugsweise zwei Messer, insbesondere vier Messer, je Lochplatte aufweisen.

Durch die Verwendung eines Füllwolfs kann eine geeignete Zerkleinerung des Materials zu einem feinkörnigen Gefüge bewirkt werden. Hierdurch wird die Homogenität des erzeugten Materials weiter verbessert werden.

An Stelle eines Füllwolfs ist erfindungsgemäß auch der Einsatz einer Kolloidmühle oder eines Extruders möglich.

Als Materialien für die Bestandteile des Füllwolfs sind beispielsweise Edel- bzw. VA-Stähle oder Kunststoffe, wie insbesondere Teflon, vorgesehen.

Schließlich kann die Portioniervorrichtung als ein Strangschneider oder als eine Formmaschine ausgebildet sein. Dabei stellt der Strangschneider eine verfahrenstechnisch einfache und kostengünstige Portioniervorrichtung dar.

Mittels der Formmaschine wird die Masse in eine oder in eine Mehrzahl von vorgegebenen Formen gepresst und in Gestalt einer vorgegebenen Form wieder abgegeben, wie es aus dem Stand der Technik bekannt ist. Durch den Einsatz einer Formmaschine lässt sich die Formenvielfalt der erzeugten Materialportionen vorteilhaft vergrößern.

Die erfindungsgemäß vorgeschlagene Vorrichtung ermöglicht eine hohe Portioniergenauigkeit mit einer Standardabweichung s des Portioniergewichts von maximal 2,4, im Mittel ≤ 1,4.

| Tabelle 1: | Mittlere Gewichte von Käseportionen und zugehörige Standardabweichungen bei Verwendung des erfindungsgemäßen und eines herkömmlichen Herstellungsverfahrens | | |
|---|---|---|---|
| Anzahl Proben [n] | mittleres Gewicht [g] | erfindunggemäßes Verfahren Standardabweichung s des mittleren Gewichts | herkömmliches Verfahren Standardabweichung s des mittleren Gewichts |
| 44 | 136,3 | 1,75 | 3,70 |
| 29 | 130,2 | 0,78 | 5,50 |
| 24 | 39,5 | 1,01 | 4,10 |
| 35 | 130,3 | 1,53 | 3,70 |
| 11 | 207,0 | 0,81 | 3,70 |
| 36 | 127,6 | 1,23 | 4,00 |
| 27 | 126,9 | 1,83 | 7,10 |
| 13 | 207,3 | 1,02 | 7,10 |
| 17 | 135,8 | 2,40 | 3,60 |
| Mittelwert über alle Versuche | | 1,37 | 4,72 |

Wie Tabelle 1 zeigt, ist die Standardabweichung s der mittleren Gewichte von Käseportionen, die nach dem erfindungsgemäßen Verfahren hergestellt wurden, mit einem Mittelwert von 1,37 geringer als von solchen, die nach einem herkömmlichen Verfahren hergestellt wurden. Bei letzteren betrug der Mittelwert der Standardabweichung 4,72.

Für die erfindungsgemäße Vorrichtung gelten alle für das vorstehend diskutierte, erfindungsgemäße Verfahren aufgeführten Vorteile in analoger Weise.

Die Erfindung wird nachfolgend in Ausführungsbeispielen anhand der Figuren der Zeichnung näher erläutert. Es zeigen:
- Fig. 1: eine schematische Darstellung der erfindungsgemäßen Vorrichtung;
- Fig. 2: eine schematische Darstellung des erfindungsgemäßen Verfahrens; und
- Fig. 3: eine schematische Darstellung einer weiteren Ausfiihrungsform des in Fig. 2 gezeigten erfindungsgemäßen Verfahrens.

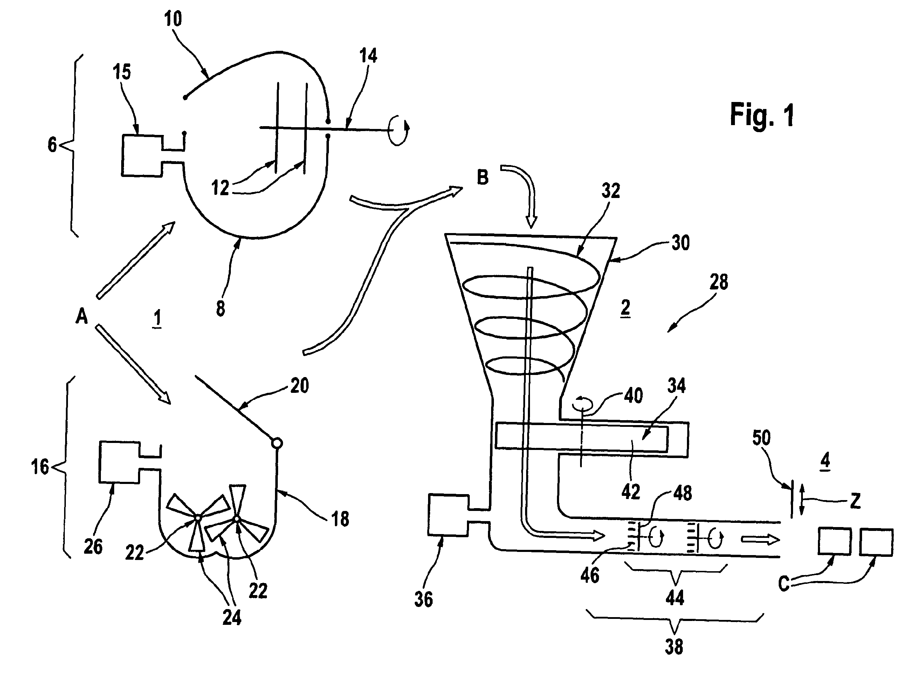

Die erfindungsgemäße Vorrichtung gemäß Fig. 1 weist eine Vorzerkleinerungsvorrichtung 1, eine Homogenisier-/Zerkleinerungsvorrichtung 2 und eine Portioniervorrichtung 4 auf.

Dabei kann die Vorzerkleinerungsvorrichtung 1 als ein Cutter 6, insbesondere als ein Schüsselcutter, oder als ein Mischer 8 ausgeführt sein.

Der Cutter 6 ist als Schüsselcutter ausgeführt und weist einen als rotierende Schüssel ausgebildeten Schneidraum 8, eine Haube 10 und eine Mehrzahl von Messern 12 auf. Die Messer 12 sind an einer im Wesentlichen waagerecht angeordneten, rotierenden Antriebswelle 14 lösbar befestigt. Ferner kann der Schüsselcutter 6 eine Vorrichtung 15 zur Erzeugung eines Vakuums im Innern des Schneidraums 8 aufweisen.

Alternativ zum Cutter 6 kann als Vorzerkleinerungsvorrichtung 1 auch ein Mischer 16 verwendet werden. Der Mischer 16 weist einen trogförmigen Mischraum 18, eine Haube 20 und wenigstens eine drehbar gelagerte Mischerwelle 22 auf. Dabei sind die Mischerwellen 22 im unteren Bereich des Mischraums 18 angeordnet. Die Mischerwellen 22 weisen eine Mehrzahl von Mischerblättem bzw. -paddeln 24 auf, die im Wesentlichen senkrecht zur Mischerwelle 22 angeordnet sind und in regelmäßigen Abständen voneinander beabstandet sind. Die Mischerblätter 24 können aber auch in einem beliebigen anderen Winkel zur Mischerwelle 22 angeordnet und/oder in variablen Abständen voneinander beabstandet sein. Ferner kann der Mischer 16 eine Vorrichtung 26 zur Erzeugung eines Vakuums im Innern des Mischraums 18 aufweisen.

Die Homogenisier-/Zerkleinerungsvorrichtung 2 kann als ein Vakuumfüller 28 ausgebildet sein. Der Vakuumfüller 28 weist einen Trichter 30, eine Zuführvorrichtung 32, ein Flügelzellenförderwerk 34, eine Vorrichtung 36 zur Erzeugung eines Vakuums im Innern des Vakuumfüllers 28 und eine Vorrichtung 38 zur Erzeugung eines Materialstrangs auf. Dabei ist die Zuführvorrichtung 32 als eine bewegliche, schneckenförmige Beförderungsvorrichtung ausgebildet. Das Flügelzellenförderwerk 34 besteht im wesentlichen aus einem um die Achse 40 drehbar gelagerten Flügelrad 42. Die Vorrichtung 38 zur Erzeugung eines Materialstrangs besteht aus einem rohrförmigen Materialabgabeteil.

Der Vakuumfüller 28 kann im Bereich der Vorrichtung 38 zur Erzeugung eines Materialstrangs optional einen Füllwolf 44 aufweisen. Der Füllwolf 44 weist wenigstens eine Lochplatte 46 mit jeweils einem Schneidwerk 48 auf. Die Lochplatte 46 weist eine Vielzahl von Öffnungen mit einem Durchmesser zwischen 0,2 und 5 mm, vorzugsweise 0,8 und 2 mm auf. Das Schneidwerk 48 weist ein mehrflügeliges Messer mit Klingen aus Edelstahl oder Kunststoff auf, das mit einer drehbar angetriebenen Schneidwerkswelle verbunden ist.

Der Homogenisier-/Zerkleinerungsvorrichtung 2 ist die Portioniervorrichtung 4 nachgeschaltet. Sie kann als ein Strangschneider 50 ausgebildet sein. Der Strangschneider 50 ist als ein gespannter Draht oder eine Metallscheibe ausgeführt und in Richtung des Pfeils Z beweglich gelagert.

Das Ausgangsmaterial A wird mittels der Vorzerkleinerungsvorrichtung 1, d.h. Cutter 6 oder Mischer 16, zu einem Material B vorzerkleinert. Das Material B wird weiter in der Homogenisier-/Zerkleinerungsvorrichtung 2, wie beispielsweise im Vakuumfüller 28, behandelt und anschließend mittels der Portioniervorrichtung 4, wie beispielsweise Strangschneider 50, in die Materialportionen C zerkleinert.

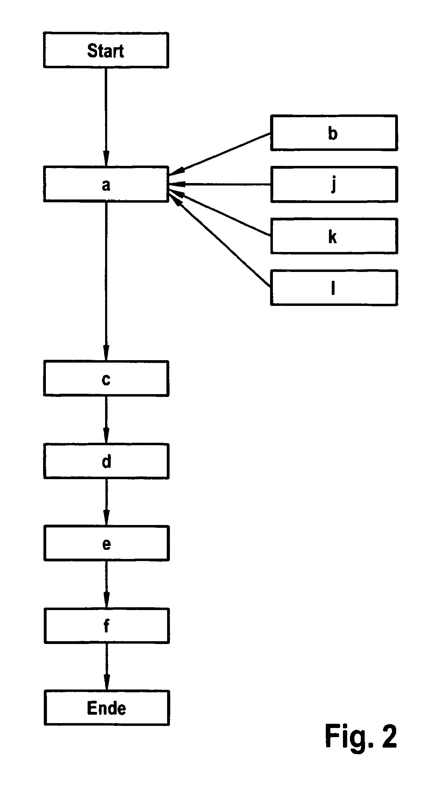

Gemäß dem in Fig. 2 dargestellten Ausführungsbeispiel wird ein Camembert, der 30 Gew.-% Fett in der Trockenmasseund eine Trockenmasse von 41 % aufweist, als Ausgangsmaterial A verwendet. Der Camembert wurde zuvor nicht in einem Salzbad behandelt und weist eine Temperatur von 14 °C auf. Das Ausgangsmaterial A wird in Schritt a) in einen Mischer 16 gegeben.

Dem Ausgangsmaterial A wird in den Schritten k) und j) Trinkwasser und Kochsalz zugegeben. Während des Schritts a) wird das verwendete Ausgangsmaterial A zerkleinert und das Leitungswasser und Kochsalz zugegeben und gemischt. Der Mischvorgang erfolgt gemäß Schritt 1) bei angelegtem Vakuum. Nach Durchführung des Zerkleinerungsschritts a) weist das erhaltene Material B ein pappiges, klumpiges, grobkörniges, förderfähiges Gefüge mit Korngrößen von < 20 mm auf. Die Korngrößen werden z.B. mittels eines Mikroskops ermittelt.

Anschließend wird das derart behandelte Material B dem Vakuumfüller 28 zugeführt.

Im Detail erfolgt die Zuführung des Materials B zum Vakuumfüller 28 mittels eines Trichters 30, der eine bewegliche, schneckenartige Zuführvorrichtung 32 aufweist. Nach dem mittels Vakuum unterstützten Eintritt des Materials B in den Vakuumfüller 28 am unteren Ende des Trichters 30 wird dem Material Luft durch Anlegen eines Grobvakuums entzogen.

Mittels dieser Vakuumentgasung durch die Vorrichtung 36 zur Erzeugung eines Vakuums kann das Auftreten von Gaseinschlüssen oder Luftporen im letztlich resultierenden Endprodukt C vermieden werden. Hierdurch kann das Erreichen der gewünschten, naturbelassenen Konsistenz des Endprodukts C weiter erleichtert werden. Im Vakuumfüller 28 liegt die Temperatur der verarbeiteten Masse im Bereich von 8 bis 14 °C.

In Schritt a) wird das zugeführte Material B mittels eines Flügelzellenförderwerks 34 mit einem als langsam drehendes Flügelrad 42 ausgeführten Förderwerks gefördert. Der Homogenisier- und Zerkleinerungsvorgang wird unter Anlegen eines Vakuums gemäß Schritt b) durchgeführt.

Das derart behandelte Material wird einem Füllwolf 44 zugeführt. Der hierzu erforderliche Druck wird allein durch den Rotor des Flügelzellenförderwerks 34 erzeugt, der das Material sowohl fördert als auch verdichtet.

Durch den mittels des Förderwerks 34 aufgebauten mechanischen Druck wird das Material durch die Lochplatten 46 des Füllwolfs 44 durchgepreßt und vom Schneidwerk 48 abgeschabt. Diese Behandlung bewirkt eine Homogenisierung und eine weitere Zerkleinerung des Materials zu einer Feinstruktur. Das Verfahren kann jedoch auch ohne Verwendung eines Füllwolfs 44 durchgerührt werden.

In den anschließenden Schritten c) und d) wird das Material in der röhrenförmigen Vorrichtung 38 zur Erzeugung eines Materialstrangs zu einer Form gepresst. Anschließend wird es mittels einer herkömmlichen Formmaschine (nicht dargestellt) in Stücke vorbestimmter Größe geschnitten oder geformt.

Bei der Formmaschine wird das Material in eine oder eine Mehrzahl von vorgegebenen Formen gepresst und in Gestalt einer vorgegebenen Form wieder abgegeben.

Das derart hergestellte Endprodukt C weist ein homogenes Gefüge auf und ist formfest, streich- und schneidbar. Dabei zeichnet sich die Portionierung durch eine hohe Gewichtsgenauigkeit mit einer Standardabweichung s von maximal 2,4 aus.

Hieran schließt sich in Schritt e) eine herkömmliche Reifung und/oder ein herkömmlicher Verpackungsschritt in Schritt f) an.

Das entstandene Käseerzeugnis weist bei dem abschließenden Verpackungsschritt eine pappige, käseartige, schnittfeste Struktur auf.

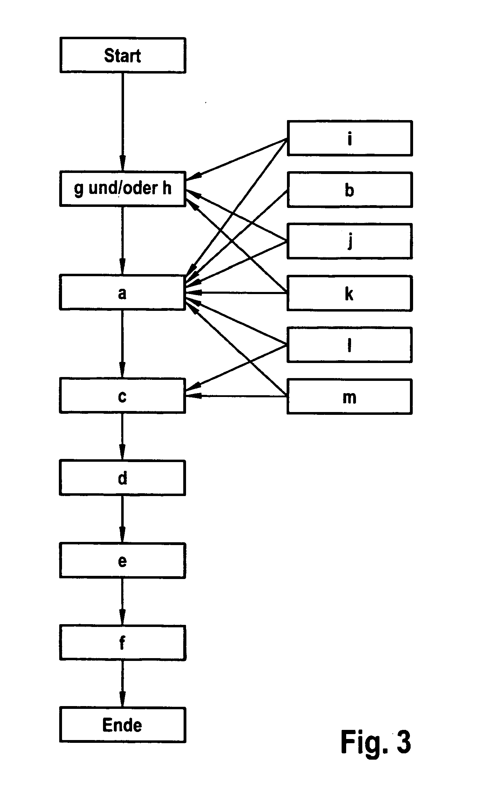

In Fig. 3 ist eine weitere beispielhafte Ausführungsform des in Fig. 2 gezeigten und vorstehend diskutierten Verfahrens schematisch vereinfacht dargestellt.

Hinsichtlich der bereits zu Fig. 2 erläuterten Verfahrensschritte a) bis f) und j) bis 1) wird zur Vermeidung von Wiederholungen auf die vorstehende Diskussion verwiesen. Darüber hinaus kann beispielsweise vor Schritt a) ein zusätzlicher Verfahrensschritt g) vorgesehen sein, zum Einstellen der Temperatur des Ausgangsmaterials auf eine Temperatur im Bereich von 0°C bis 20 °C. Ferner kann als weitere Alternative vor Schritt a) ein zusätzlicher Verfahrensschritt h) vorgesehen sein, zum Beaufschlagen des Ausgangsmaterials mit Salz, vorzugsweise in Gestalt einer Salzlake oder eines Trockensalzes.

Des weiteren kann vor oder während des Schrittes a) ein weiterer Verfahrensschritt i) vorgesehen sein, zur Zugabe von wenigstens einem halbfertigen oder fertigen Käse, wobei in analoger Weise die bereits diskutierten Verfahrensschritte j) oder k) alternativ oder ergänzend vor oder während Schritt a) vorgesehen sein können. Schließlich kann des weiteren während der Schritte a) und/oder c) alternativ oder ergänzend zum bereits diskutierten Schritt 1) ein weiterer Schritt m) vorgesehen sein, zum Beaufschlagen des Materials mit einem Inertgas, vorzugsweise Stickstoff, oder einem Gemisch von Inertgasen.

Die Erfindung ist jedoch nicht auf die vorstehend genannten Ausfiihrungsformen und Beispiele beschränkt.

So kann als Ausgangmaterial nicht nur ein Bruch oder ein gereifter Käse, sondern auch ein Käsematerial jeder Verarbeitungsstufe sowie ein Milch- und/oder Molkenretentat verwendet werden. Dies schließt insbesondere alle in Zusammenhang mit der Käseherstellung bekannten und denkbaren Materialien ab der Portionierung bis zur abgeschlossenen Reife ein.

Das Ausgangsmaterial kann gesalzen oder ungesalzen eingesetzt werden.

Das Ausgangsmaterial kann einen Fettgehalt im Bereich von 10 bis 70 Gew.-% in der Trockenmasse aufweisen.

Das Ausgangsmaterial kann eine Trockenmasse im Bereich von 20 bis 60 % aufweisen.

Das Ausgangsmaterial kann eine Temperatur im Bereich von 0 bis 20 °C aufweisen.

Das Ausgangsmaterial kann einen pH-Wert von ≥ 4,50 aufweisen.

Das Ausgangsmaterial kann bereits vorzerkleinert im Schritt a) zugeführt werden.

## Patentansprüche

1. Verfahren zur Herstellung eines Käses oder einer Käsezubereitung unter Verwendung eines Ausgangsmaterials, vorzugsweise eines Bruchs, eines gereiften Käses oder einer Zubereitung aus frischem oder gereiftem Käse sowie aus Milch-und/oder Molkenretentat, mit den Schritten:
a) Zerkleinern des Ausgangsmaterials derart, dass das Ausgangsmaterial ein homogenes, schnittfestes, feinkörniges Gefüge mit Korngrößen von ≤ 10 mm aufweist, oder Zuführen eines zerkleinerten Ausgangsmaterials;
b) während des Verfahrensschrittes a) Beaufschlagen des Materials mit einem Vakuum;
c) Formen des Materials; und
d) Portionieren des Materials.

2. Verfahren zur Herstellung eines Käses oder einer Käsezubereitung nach Anspruch 1, **dadurch gekennzeichnet, dass** vor Schritt c) das resultierende Material ein homogenes, schnittfestes, feinkörniges Gefüge mit Korngrößen von ≤ 4 mm bis in den µm-Bereich aufweist.

3. Verfahren zur Herstellung eines Käses oder einer Käsezubereitung nach Anspruch 1 oder 2, **dadurch gekennzeichnet, dass** in Schritt b) der absolute Druck des Vakuums ≤ 0,8 bar beträgt.

4. Verfahren zur Herstellung eines Käses oder einer Käsezubereitung nach einem der Ansprüche 1 bis 3, **dadurch gekennzeichnet; dass** das Verfahren ferner den Schritt aufweist:
e) Reifen des nach Schritt d) portionierten Materials.

5. Verfahren zur Herstellung eines Käses oder einer Käsezubereitung nach einem der Ansprüche 1 bis 4, **dadurch gekennzeichnet, dass** das Verfahren ferner den Schritt aufweist:
f) Verpacken des Materials.

6. Verfahren zur Herstellung eines Käses oder einer Käsezubereitung nach einem der Ansprüche 1 bis 5, **dadurch gekennzeichnet, dass** das Verfahren ferner den Schritt aufweist:
g) vor Schritt a) Einstellen der Temperatur des Ausgangsmaterials auf eine Temperatur im Bereich von 0 bis 20 °C.

7. Verfahren zur Herstellung eines Käses oder einer Käsezubereitung nach einem der Ansprüche 1 bis 6, **dadurch gekennzeichnet, dass** das Verfahren ferner den Schritt aufweist:
h) vor Schritt a) Beaufschlagen des Ausgangsmaterials mit Salz, vorzugsweise in Gestalt einer Salzlake oder eines Trockensalzes.

8. Verfahren zur Herstellung eines Käses oder einer Käsezubereitung nach einem der Ansprüche 1 bis 7, **dadurch gekennzeichnet, dass** das Verfahren vor oder während des Schritts a) ferner wenigstens einen der Schritte aufweist:
i) Zugabe von wenigstens einem halbfertigen oder fertigen Käse; oder
j) Zugabe von wenigstens einem Hilfsstoff, ausgewählt aus einer Gruppe, wobei die Gruppe die gemäß der Käseverordnung in der geltenden Fassung zulässigen Hilfs- und Zusatzstoffe ausgenommen Wasser und Wasserdampf enthält; oder
k) Zugabe von Wasser in einer Menge von ≤ 20, vorzugsweise ≤ 10, ≤ 7, ≤ 5, ≤ 4 oder insbesondere ≤ 3 Gew.-%, bezogen auf die Masse des feuchten Ausgangsmaterials.

9. Verfahren zur Herstellung eines Käses oder einer Käsezubereitung nach einem der Ansprüche 1 bis 8, **dadurch gekennzeichnet, dass** das Verfahren während der Schritte a) und/oder c) ferner wenigstens einen der Schritte aufweist:
1) Beaufschlagen des Materials mit einem Vakuum; oder
m) Beaufschlagen des Materials mit einem Inertgas, vorzugsweise Stickstoff, oder mit einem Gemisch von Inertgasen.

10. Verfahren zur Herstellung eines Käses oder einer Käsezubereitung nach einem der Ansprüche 1 bis 9, **dadurch gekennzeichnet, dass** während der Schritte a) bis d) eine thermische Behandlung des Ausgangsmaterials oder des Materials, insbesondere ein Kühlen oder Erwärmen des Ausgangsmaterials oder des Materials, unterbleibt.

11. Verfahren zur Herstellung eines Käses oder einer Käsezubereitung nach einem der Ansprüche 1 bis 10, **dadurch gekennzeichnet, dass** wenigstens während der Schritte a) bis d) die Temperatur des Ausgangsmaterials oder des Materials jeweils eine Temperatur von 50 °C, vorzugsweise 40 °C, insbesondere 30 °C, nicht überschreitet.

12. Vorrichtung zur Herstellung eines Käses oder einer Käsezubereitung, insbesondere zur Durchführung des Verfahrens nach einem der Ansprüche 1 bis 11, wobei die Vorrichtung wenigstens nachfolgende Bestandteile aufweist:
- eine Vorzerkleinerungsvorrichtung (1);
- eine Homogenisier-/Zerkleinerungsvorrichtung (2); und
- eine Portioniervorrichtung (4);
wobei die Vorzerkleinerungsvorrichtung (1) als ein Cutter (6), insbesondere ein Schüsselcutter, oder ein Mischer (16) ausgeführt ist;
**dadurch gekennzeichnet, dass**
die Homogenisier-/Zerkleinerungsvorrichtung (2) als ein Vakuumfüller (28) ausgeführt ist, wobei der Vakuumfüller (28) eine Zuführeinrichtung (32), insbesondere einen Trichter (30), ein Flügelzellenförderwerk (34), eine Vorrichtung (36) zur Erzeugung eines Vakuums und eine Vorrichtung (38) zur Erzeugung eines Materialstrangs aufweist.

13. Vorrichtung nach Anspruch 12, **dadurch gekennzeichnet, dass** die Vorzerkleinerungsvorrichtung (1) eine Vorrichtung (15; 26) zur Erzeugung eines Vakuums aufweist.

14. Vorrichtung nach Anspruch 12 oder 13, **dadurch gekennzeichnet, dass** der Vakuumfüller (28) ferner einen Füllwolf (44) mit wenigstens einer Lochplatte (46), vorzugsweise zwei Lochplatten (46), und wenigstens einem Schneidwerk (48), aufweist.

15. Vorrichtung nach einem der Ansprüche 12 bis 14, **dadurch gekennzeichnet, dass** die Portioniervorrichtung (4) als ein Strangschneider (50) oder als eine Formmaschine ausgeführt ist.

## Claims

1. Method for producing a cheese or a cheese preparation using a starting material, preferably a piece, of a matured cheese or a preparation of fresh or matured cheese and of milk retentate and/or whey retentate, having the steps:
a) comminution of the starting material such that the starting material has a homogeneous, firm, fine-grain structure having grain sizes of ≤ 10 mm, or supplying a comminuted starting material;
b) during method step a), exposure of the material to a vacuum;
c) shaping the material; and
d) portioning the material.

2. Method for producing a cheese or a cheese preparation according to claim 1, **characterised in that** before step c), the resulting material has a homogenous, firm, fine-grain structure having grain sizes of ≤ 4 mm to the µm range.

3. Method for producing a cheese or a cheese preparation according to claim 1 or 2, **characterised in that** in step b), the absolute pressure of the vacuum is ≤ 0.8 bar.

4. Method for producing a cheese or a cheese preparation according to one of claims 1 to 3, **characterised in that** the method also has the step: e) maturing the material which is portioned according to step d).

5. Method for producing a cheese or a cheese preparation according to one of claims 1 to 4, **characterised in that** the method also has the step: f) packaging the material.

6. Method for producing a cheese or a cheese preparation according to one of claims 1 to 5, **characterised in that** the method also has the step:
g) before step a), setting the temperature of the starting material to a temperature in the range from 0 to 20 °C.

7. Method for producing a cheese or a cheese preparation according to one of claims 1 to 6, **characterised in that** the method also has the step:
h) before step a), exposing the starting material to salt, preferably in the form of a brine or a dry salt.

8. Method for producing a cheese or a cheese preparation according to one of claims 1 to 7, **characterised in that** before or during step a), the method also has at least one of the steps:
i) addition of at least one semi-finished or finished cheese; or
j) addition of at least one auxiliary material, selected from a group, wherein the group contains the auxiliary materials and additives permissible according to the cheese regulation in the current version except for water and steam; or
k) addition of water in a quantity of ≤ 20, preferably ≤ 10, ≤ 7, ≤ 5, ≤4 or in particular ≤ 3 wt.%, relative to the mass of the moist starting material.

9. Method for producing a cheese or a cheese preparation according to one of claims 1 to 8, **characterised in that** during steps a) and/or c), the method also has at least one of the steps:
l) exposing the material to a vacuum; or
m) exposing the material to an inert gas, preferably nitrogen, or to a mixture of inert gases.

10. Method for producing a cheese or a cheese preparation according to one of claims 1 to 9, **characterised in that** during steps a) to d), thermal treatment of the starting material or of the material, in particular cooling or heating of the starting material or of the material, stops.

11. Method for producing a cheese or a cheese preparation according to one of claims 1 to 10, **characterised in that** at least during steps a) to d), the temperature of the starting material or of the material in each case does not exceed a temperature of 50 °C, preferably 40 °C, in particular 30 °C.

12. Device for producing a cheese or a cheese preparation, in particular for carrying out the method according to one of claims 1 to 11, wherein the device has at least the following components:
- a pre-comminution device (1);
- a homogenising/comminution device (2); and
- a portioning device (4);
wherein the pre-comminution device (1) is designed as a cutter (6), in particular a key cutter, or a mixer (16);
**characterised in that**
the homogenising/comminution device (2) is designed as a vacuum charger (28), wherein the vacuum charger (28) has a supply device (32), in particular a funnel (30), a vane-cell conveyer system (34), a device (36) for generating a vacuum and a device (38) for generating a material bar.

13. Device according to claim 12, **characterised in that** the pre-comminution device (1) has a device (15; 26) for generating a vacuum.

14. Device according to claim 12 or 13, **characterised in that** the vacuum charger (28) also has a charging shredder (44) having at least one perforated plate (46), preferably two perforated plates (46), and at least one cutting system (48).

15. Device according to one of claims 12 to 14, **characterised in that** the portioning device (4) is designed as a bar slicer (50) or as a shaping machine.

## Revendications

1. Procédé de production d'un fromage ou d'une préparation au fromage en utilisant un matériau de départ, de préférence, une fraction, d'un fromage affiné ou d'une préparation de fromage frais ou affiné et de lait et/ou de rétentat de petit-lait, comprenant les étapes de :
a) broyage du matériau de départ de telle sorte que le matériau de départ présente une structure homogène, ferme, à grains fins, présentant une taille de grains de ≤ 10 mm ou apport d'un matériau de départ broyé ;
b) pendant l'étape du procédé a), application d'un vide sur le matériau ;
c) mise en forme du matériau ; et
d) portionnement du matériau.

2. Procédé de production d'un fromage ou d'une préparation au fromage selon la revendication 1, **caractérisé en ce que**, avant l'étape c), le matériau obtenu présente une structure homogène, ferme, à grains fins présentant une taille de grains ≤ 4 mm, jusqu'à l'échelle du µm.

3. Procédé de production d'un fromage ou d'une préparation au fromage selon la revendication 1 ou 2, **caractérisé en ce que**, à l'étape b), la pression absolue du vide est ≤ 0,8 bar.

4. Procédé de production d'un fromage ou d'une préparation au fromage selon l'une des revendications 1 à 3, **caractérisé en ce que** le procédé présente en outre l'étape de :
e) affinage du matériau en portions selon l'étape d).

5. Procédé de production d'un fromage ou d'une préparation au fromage selon l'une des revendications 1 à 4, **caractérisé en ce que** le procédé présente en outre l'étape de :
f) conditionnement du matériau.

6. Procédé de production d'un fromage ou d'une préparation au fromage selon l'une des revendications 1 à 5, **caractérisé en ce que** le procédé présente en outre l'étape de :
g) avant l'étape a), ajustement de la température du matériau de départ à une température dans une plage de 0 à 20 °C.

7. Procédé de production d'un fromage ou d'une préparation au fromage selon l'une des revendications 1 à 6, **caractérisé en ce que** le procédé présente en outre l'étape de :
h) avant l'étape a), salage du matériau de départ, de préférence sous la forme d'une saumure ou d'un sel sec.

8. Procédé de production d'un fromage ou d'une préparation au fromage selon l'une des revendications 1 à 7, **caractérisé en ce que** le procédé présente en outre, avant ou pendant l'étape a) au moins l'une des étapes de :
i) addition d'au moins un fromage semi-fini ou fini ; ou
j) addition d'au moins un adjuvant choisi dans un groupe, le groupe contenant les additifs et adjuvants autorisés selon le décret sur les fromages dans la version en vigueur, excepté l'eau et la vapeur d'eau ; ou
k) addition d'eau en une quantité de ≤ 20, de préférence 10, ≤ 7, ≤ 5, ≤ 4 ou en particulier ≤ 3 % en poids par rapport à la masse du matériau de départ humide.

9. Procédé de production d'un fromage ou d'une préparation au fromage selon l'une des revendications 1 à 8, **caractérisé en ce que** le procédé présente, pendant l'étape a) et/ou l'étape c), en outre au moins l'une des étapes de :
l) application d'un vide sur le matériau ; ou
m) application d'un gaz inerte au matériau, de préférence, de l'azote ou d'un mélange de gaz inertes.

10. Procédé de production d'un fromage ou d'une préparation au fromage selon l'une des revendications 1 à 9, **caractérisé en ce que**, pendant les étapes a) à d), il n'y a pas de traitement thermique du matériau de départ ou du matériau, en particulier de refroidissement ou de réchauffement du matériau de départ ou du matériau.

11. Procédé de production d'un fromage ou d'une préparation au fromage selon l'une des revendications 1 à 10, **caractérisé en ce qu'**au moins pendant les étapes a) à d), la température du matériau de départ ou du matériau ne dépasse pas une température de 50 °C, de préférence de 40 °C, en particulier, de 30 °C.

12. Dispositif de production d'un fromage ou d'une préparation au fromage, en particulier, pour la réalisation du procédé selon l'une des revendications 1 à 11, le dispositif présentant au moins les composants suivants :
- un dispositif de pré-broyage (1) ;
- un dispositif d'homogénéisation - broyage (2) ; et
- un dispositif de portionnement (4) ;
le dispositif de pré-broyage (1) étant constitué comme un dispositif de coupage (6), en particulier un dispositif de coupage à clé ou un mélangeur (16) ;
**caractérisé en ce que**
la préparation d'homogénéisation/broyage (2) est conçue comme un remplisseur à vide (28), le remplisseur à vide (28) présentant un dispositif d'acheminement (32), en particulier, un entonnoir (30), un dispositif d'avancement à aube (34), un dispositif (36) de génération d'un vide et un dispositif (38) de génération d'un cordon de matériau.

13. Dispositif selon la revendication 12, **caractérisé en ce que** le dispositif de pré-broyage (1) présente un dispositif (15, 26) de génération d'un vide.

14. Dispositif selon la revendication 12 ou 13, **caractérisé en ce que** le remplisseur à vide (28) présente en outre un appareil de remplissage (44) présentant au moins une plaque à trous (46), de préférence deux plaques à trous (46) et au moins une machine à couper (48).

15. Dispositif selon l'une des revendications 12 à 14, **caractérisé en ce que** le dispositif de portionnement (4) est conçu comme un coupeur de cordon (50) ou une machine de formage.
